# EUROPÄISCHE PATENTANMELDUNG

(11) **EP 0 599 235 A1**
(43) Veröffentlichungstag der Anmeldung: **01.06.1994**
(21) Anmeldenummer: 93118706.6
(22) Anmeldetag: 22.11.1993
(51) Int. Cl.: B61D 17/04, B61D 1/00

(54) **Spurgebundenes Fahrzeug**

(30) Priorität: 27.11.1992 DE 4239882
(71) Anmelder: ABB HENSCHEL WAGGON UNION GmbH, D-13509 Berlin (DE)
(72) Erfinder: Tegeler, Ferdinand, D-13857 Berlin (DE); Kühnel, Arne, Dr., D-12203 Berlin (DE)
(74) Vertreter: Rupprecht, Klaus, Dipl.-Ing.

(57) **Zusammenfassung**

Die Erfindung betrifft ein spurgebundenes Fahrzeug (10), insbesondere Personenwagen, mit einem auf einem Untergestell (20) mit Bodenwanne angeordneten Wagenkasten (12) mit zwei in Abstand von seinen Stirnseiten (21) jeweils in einem Fahrwerksbereich (22) angeordneten Fahrwerken (18), einem dazwischen befindlichen Mittelbereich (24) und jeweils sich vom Fahrwerksbereich (22) sich zu den Stirnseiten (21) hin verjüngenden Endbereichen (23) sowie mit einem Dach (16), wobei der Grundriß des Wagenkastens (12) polygonartige Längsseiten aufweist, so daß der Grundriß des Wagenkastens (12) von den Stirnseiten (21) zum Fahrwerksbereich (22) hin in seiner Breite zunimmt und in einen demgegenüber verengten Mittelbereich (24) mit geringerer Breite übergeht.

## Beschreibung

Die Erfindung betrifft ein spurgebundenes Fahrzeug, insbesondere einen Personenwagen, mit einem auf einem Untergestell mit Bodenwanne angeordneten Wagenkasten mit zwei im Abstand von seinen Stirnseiten jeweils in einem Fahrwerksbereich angeordneten Fahrwerken, einem dazwischen befindlichen Mittelbereich und jeweils vom Fahrwerksbereich sich zu den Stirnseiten hin verjüngenden Endbereichen sowie mit einem Dach.

Bei spurgebundenen Fahrzeugen ist es seit langem bekannt, insbesondere bei Personenwagen für den Reisefernverkehr wie auch bei Straßenbahnen, die Endbereiche dieser Fahrzeuge in ihrer Breite gegenüber dem Mittelbereich abzusetzen oder aber zumindest zu den Strinseiten hin zu verjüngen, um den freien Überhang des Wagenkastens bei Kurven und Bögen im vorgegebenen Lichtraumprofil zu halten. Das Lichtraumprofil ist das Profil, welches allseitig, vom Gleis aus gemessen, nicht überschritten werden darf, um z. B. bei Mehrgleisbetrieb bzw. in Engstellen mögliche Kollisionen sicher auszuschließen.

Bisher wird die Breite der Wagen, die sogenannte Wagenkastenbreite, nach der schmalsten Stelle der inneren Einschränkung in der engsten zu befahrenden Kurve bzw. Bogen ausgelegt. Dies führt dazu, daß bei üblichen Fahrzeugen, die gemäß Lichtraumprofil maximal zulässige Breite des Wagenkastens nicht ausgenutzt werden kann, da bei Kurven und Bögen eine innere bzw. äußere Einschränkung durch das Auswandern des Wagenkastens erfolgt. Um also eine Überschreitung der durch das Lichtraumprofil vorgegebenen Umgrenzung zu verhindern, ist die Wagenkastenbreite gegenüber der maximal zulässigen Breite auf gerader Strecke soweit zu verringern, daß auch bei Kurven das vorgegebene Umgrenzungsprofil eingehalten wird.

Hierdurch ist zwangsläufig das an sich, bezogen auf die gerade Strecke, mögliche Raumangebot des Wagenkastens verringert.

Ausgehend von diesem Stand der Technik ist es daher Aufgabe der Erfindung ein spurgebundenes Fahrzeug der eingangs genannten Art derart weiterzubilden, daß unter Einhaltung der sich aus dem vorgegebenen Lichtraumprofil ergebenden Randbedingungen das Raum- bzw. Platzangebot in jedem Wagen vergrößert wird.

Die Lösung der Aufgabe besteht erfindungsgemäß in den kennzeichnenden Merkmalen des Patentanspruchs 1. Danach ist vorgesehen, daß der Grundriß des Wagenkastens polygonartige Längsseiten aufweist mit von den Stirnseiten zum Fahrwerksbereich hin zunehmender Breite und einem sich hieran anschliessenden verengten Mittelbereich mit geringerer Breite. Eine deraratige Gestaltung, die in der Projektion einem Knochen ähnlich ist, nämlich mit zwei endnahen Erweiterungen und einem diese Erweiterungen verbindenden schlankeren Mittelbereich, kann den Anforderungen aus den Vorgaben des Lichtraumprofils entsprochen werden und gleichzeitig das Platzangebot um ca. 7 % gegenüber herkömmlichen Wagen vergrößert werden.

Während seither bei der Konstruktion von spurgebundenen Fahrzeugen lediglich auf den Überhang der Endbereiche geachtet wurde, was zu der Ausgestaltung mit verjüngten Enden führte, ist der dazwischen liegende Bereich bislang mit zueinander parallelen Längsseiten auf das sich aus den zuvor erläuterten Randbedingungen ergebende Maximalmaß der Wagenkastenbreite ausgelegt. Gemäß der Erfindung ist nun vorgesehen, für die Breite des Wagenkasten in den Fahrwerksbereichen das Maximalmaß aus dem Lichtraumprofil vorzugeben und den dazwischen befindlichen Mittelbereich schlanker zu gestalten, d. h., mit geringerer Breite zu versehen und damit dem Verlauf der Einschränkungskurve anzupassen.

Dies führt dazu, daß der Wagenkasten in der Mitte, d. h. bei halber Länge, die seither übliche Breite erhält und sich zu den Fahrwerksbereichen hin auf eine größere Wagenbreite erweitert.

Wie bereits erwähnt, kann hierdurch die Grundfläche des Wagenkastens deutlich vergrößert werden, so daß beispielsweise bei Reisezugwagen ohne Einschränkung des Komforts bzw. von Sicherheitsvorschriften zusätzliche Sitzplätze eingebaut werden können.

In vorteilhafter Weiterbildung der Erfindung ist vorgesehen, daß der Grundriß des Wagenkastens symmetrisch zueinander ausgebildete Längsseiten aufweist, wobei die Fahrwerksbereiche beiderseits des Mittelbereichs die gleiche Außenkontur haben. Dementsprechend folgen die Seitenwände des Wagenkastens dem polygonartigen Verlauf der Längsseiten des Grundrisses.

Gemäß einer bevorzugten Ausführungsform der Erfindung besitzt der Wagenkasten im Fahrwerksbereich eine maximal zulässige Breite, die sich aus dem vorgegebenen Lichtraumprofil ergibt, und im Mittelbereich eine hiervon verschiedene geringere Mindestbreite, die, wie bereits erwähnt, der seitherigen Maximalbreite entspricht.

In zweckmäßiger Weiterbildung der Erfindung ist die Anbindung der Seitenwände des Wagenkasten an dem Fahrzeugdach im gekrümmten Bereich vorgesehen, wobei das Dach hinsichtlich seiner Breite an die zuvor erwähnte bestimmte Mindestbreite des Wagenkastens im Mitelbereich angepaßt ist und geradlinig durchlaufend ausgeführt ist. Hierbei auftretende infolge der Breitenunterschiede bedingte Zwischenräume zwischen Dach und Seitenwänden sind mittels entsprechend ausgestalteter Obergurte überbrückt, welche auf die Seitenwände angesetzt sind. Dies hat den Vorteil, daß das Dach als Standardbauteil vorgefertigt werden kann.

Vorteilhaft erfolgen die Breitenänderungen des Grundrisses harmonisch, d. h. die Seitenwände des Wagenkastens, die vorzugsweise aus einzelnen Seitenwandelementen gebildet sind und entsprechend ihrer Anordnung am Wagenkasten einen unterschiedlichen Abstand zum entsprechenden Seitenwandelement auf der gegenüberliegenden Längsseite des Wagenkastens aufweisen, zeigen einen gleitenden, praktisch knickfreien Übergang von der Maximalbreite zur Minimalbreite und umgekehrt.

Entsprechend einer weiteren bevorzugten Ausgestaltung der Erfindung sind die als Drehgestelle ausgebildeten Fahrwerke mit ihren Drehzapfen im Abstand von ca. 15 % der Gesamtlänge des Fahrzeugs jeweils von der Stirnseite her gemessen angeordnet. Hierdurch ergibt sich ein besonderer Vorteil sowohl für die Größe des Fahrwerksbereichs mit der Maximalbreite als auch für die bestimmte Mindestbreite des Mittelbereichs, da dessen Einschränkung in Kurven bzw. Bögen hierdurch geringer ausfällt.

Gemäß einer weiteren bevorzugten Ausgestaltung der Erfindung sind Außenlangträger zur Bildung des Untergestells vorgesehen, die entsprechend den Seitenwandelementen geteilt und mit diesen gleichlaufend angeordnet sind. Dabei erfolgt der Anschluß der Außenlangträger an die Bodenwanne durch entsprechend der jeweiligen Wagenkastenbreite unterschiedlich lange Querträger. Dabei erhält die Bodenwanne des Wagenkastens weiterhin die allgemein bekannte Ausführung, so daß eine Änderung der an der Bodenwanne anzuordnenden Geräte und Einrichtungen nicht erforderlich ist.

Die Außenlangträger zur Bildung des Untergestells sind als J-Profile ausgebildet mit entsprechend dem Verlauf der Seitenwände örtlichen Abwinklungen. Die hierbei auftretenden Kräfte werden durch die Querträger aufgenommen.

Zur Verbindung der Seitenwände mit dem Dach dienen jeweils Obergurte, die entsprechend den Seitenwandelementen geteilt und durch entsprechende, in der Breite angepaßte Dachüberlappungen an das Dach angeschlossen sind. Hierdurch ist die Möglichkeit geboten, daß das Dach als vorgefertigtes Bauelement geradlinig durchlaufend ausgeführt werden kann, wobei die Unterschiede in der Breite, die sich aus den polygonartigen Verlauf der Seitenwände ergeben, mittels der auf die Seitenwände angesetzten Obergurte ausgeglichen werden.

Diese und weitere vorteilhafte Ausgestaltungen der Erfindung sind Gegenstand der Unteransprüche.

Anhand eines in der Zeichnung dargestellten Ausführungsbeispieles sollen die Erfindung, vorteilhafte Ausgestaltungen und Verbesserungen sowie besondere Vorteile der Erfindung näher erläutert und beschrieben werden.

Es zeigen:
- Fig 1: eine Seitenansicht eines erfindungsgemäßen Fahrzeugs
- Fig 2: einen Grundriß des Fahrzeugs gemäß Figur 1
- Fig 3: einen Querschnitt durch eine Seitenwand
- Fig 4: eine Ausschnittsvergrößerung des Ausschnitts A in Figur 3, die einen Querschnitt durch einen Obergurt in Wagenmitte zeigt
- Fig 5: einen Querschnitt durch einen Obergurt im Endbereich
- Fig 6: einen Schnitt durch einen Langträger bei halber Fahrzeuglänge

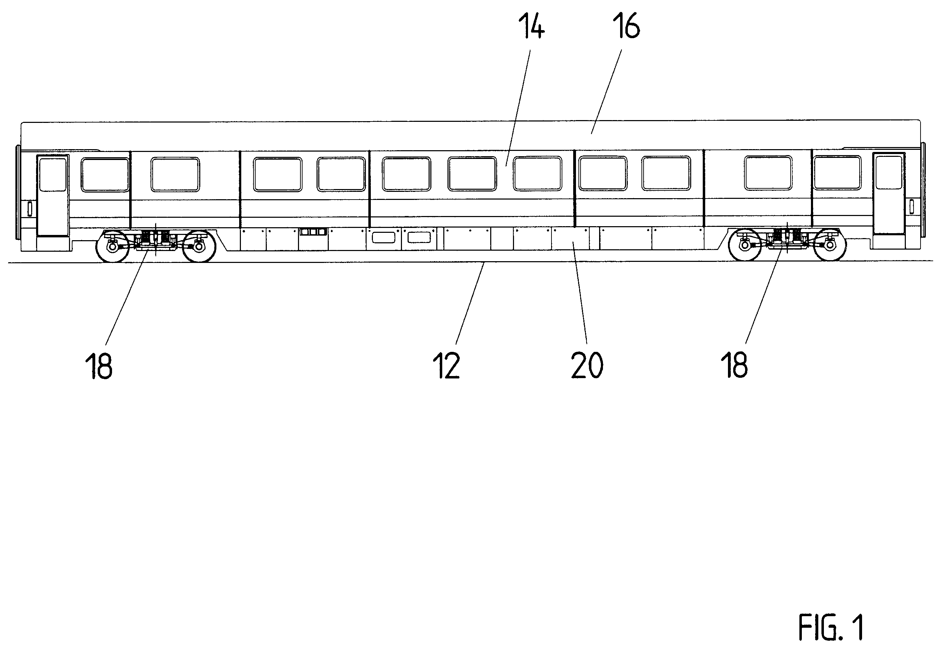

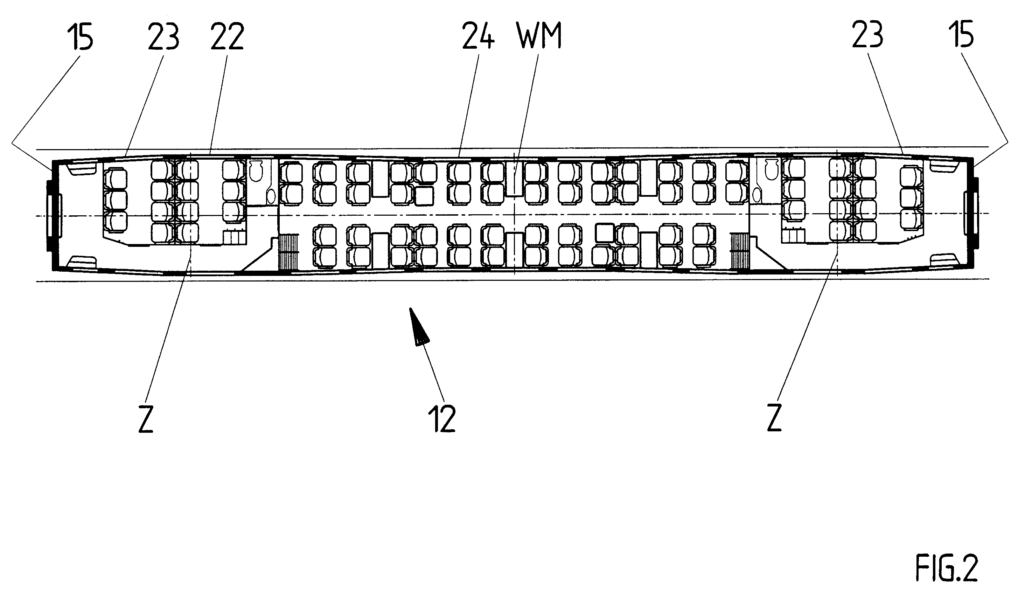

In Figur 1 ist ein spurgebundenes Fahrzeug 10 dargestellt, nämlich ein Reisezugwagen, das einen Wagenkasten 12 mit Seitenwänden 14, einem Dach 16 und zwei als Drehgestelle ausgebildeten Fahrwerken 18 aufweist. Unterhalb des Wagenkastens 12 ist ein Untergestell 20 angeordnet, an welchem die Fahrwerke 18 mit ihren Drehzapfen anschließen. Die Lage der nicht näher dargestellten Drehzapfen befindet sich, wie in Figur 2 dargestellt, im Schnittpunkt der Strichlinien "Z" und der Längsmittellinie des Fahrzeugs 10.

Wie insbesondere aus der in Figur 2 erkennbaren Darstellung des Grundrisses des Fahrzeugs 10 gemäß Figur 1 entnehmbar ist, haben die Seitenwände 14 einen polygonartigen Verlauf. Ausgehend von einer Stirnseite 15 verläuft die Seitenwand 14 zunächst noch in Längsrichtung gesehen nach außen, wo sie in einem Fahrwerksbereich 22 einen Maximalabstand von der Längsmittellinie des Wagenkastens 12 aufweist. Von dieser Maximalbreite im Fahrwerksbereich 22 des Wagenkastens 12 verläuft die Seitenwand 14 wieder einwärts und geht in einen Mittelbereich 24 über, der eine bestimmte Mindestbreite besitzt. Ab halber Wagenlänge, symbolisch markiert mit einer Strichpunktlinie "WM" ist der weitere Verlauf entsprechend umgekehrt, bis die Seitenwand an der gegenüberliegenden Stirnseite 15 wieder die Minimalbreite des Fahrzeugkastens 12 erreicht. Dabei ist als Fahrwerksbereich 22 derjenige Bereich des Wagenkastens 12 definiert, in welchem die Fahrwerke 18 untergebracht sind.

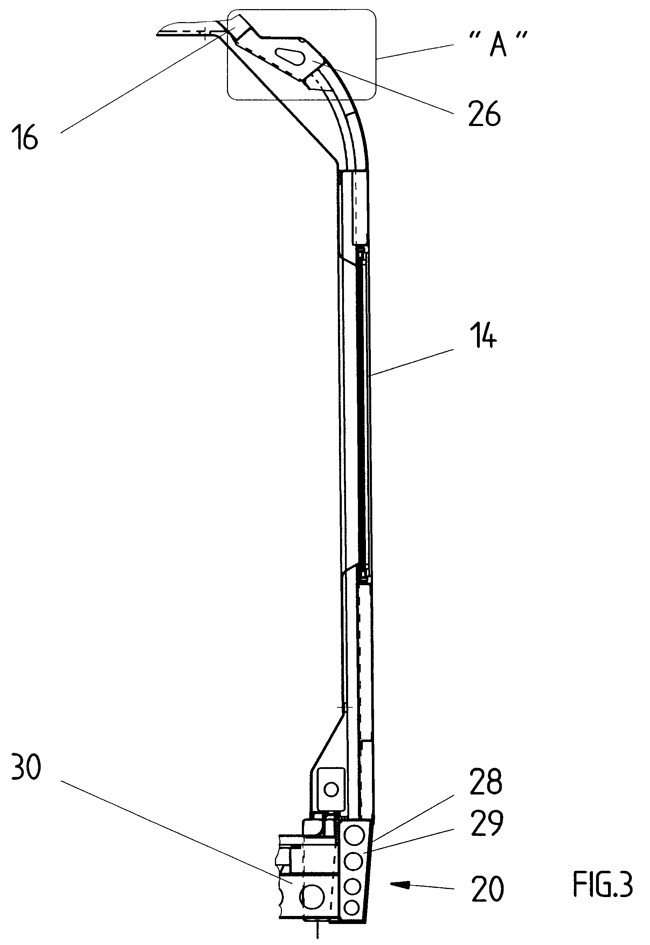

In Figur 3 ist ein Querschnitt durch eine Seitenwand 14 gezeigt mit einem oberhalb angesetzten Obergurt 26, der die Verbindung zwischen der Seitenwand 14 und dem Dach 16 herstellt. Dabei weist die Seitenwand 14 in ihrem oberen Anschlußbereich zum Obergurt 26 eine Krümmung angepaßt an die Dachwölbung auf.

Unten schließt an die Seitenwand 14 das Untergestell mit einem Außenlängsträger 28 an, wie der Darstellung in Figur 3 in Verbindung mit Figur 2 zu entnehmen ist, wobei der Außenlangträger 28 dem polygonartigen Verlauf der Seitenwand 14 folgt, wobei aufgrund der vorgesehenen Breitenänderungen des Wagenkastens Abweichungen von der Geradlinigkeit unvermeidlich sind. Um die hierbei auftretenden Kräfte sicher abtragen zu können, sind die Außenlangträger 28 mit Querträgern 30 verbunden. Außerdem sind die Außenlangträger 28 zur Erhöhung ihrer Steifigkeit mit Quersegementen 29 versehen, die zum Zwecke einer Gewichtsersparnis gelocht ausgeführt sind.

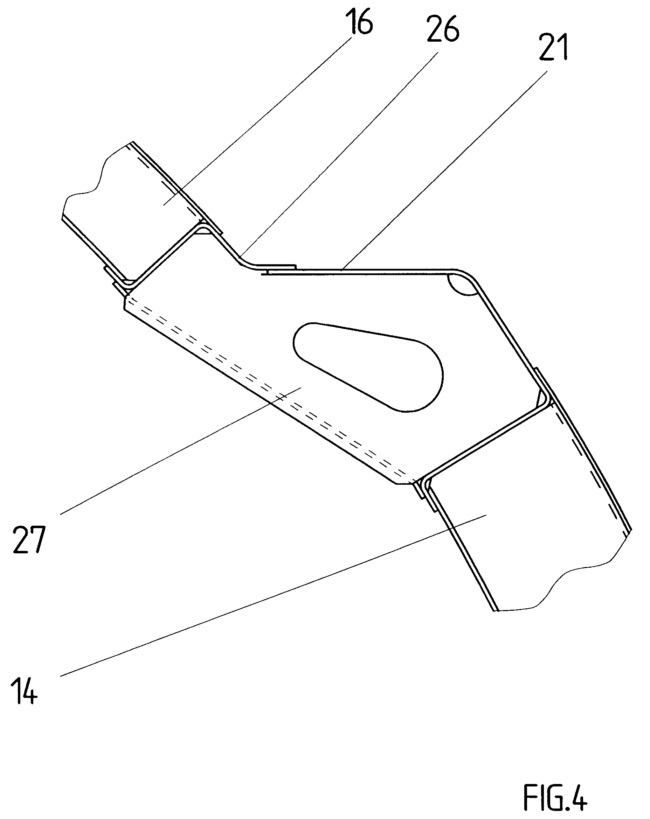

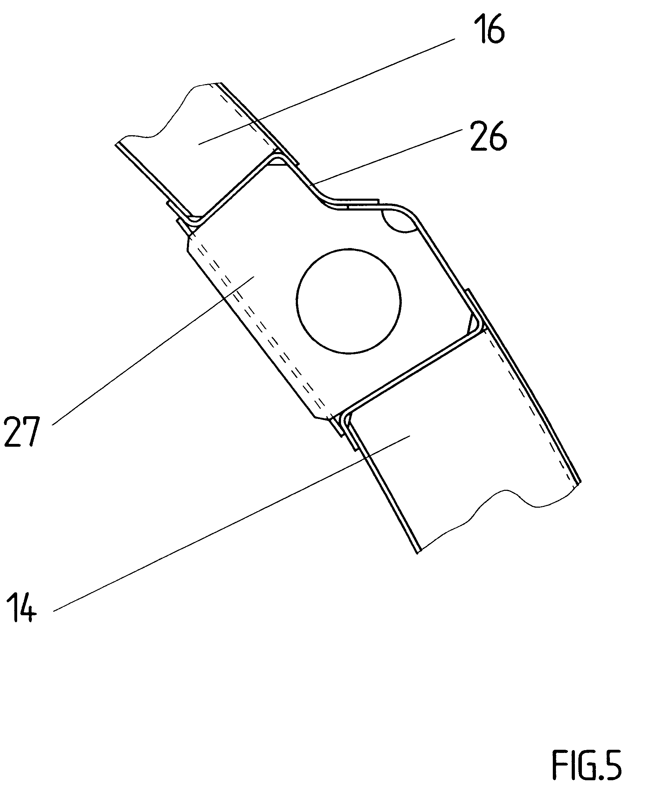

In Figur 4 ist eine Ausschnittsvergrößerung des in Figur 3 gezeigten Ausschnitts A wiedergegeben, die einen Obergurt 26 zeigt, welcher zur Verbindung der Seitenwand 14 mit dem Dach 16 dient. Im Vergleich zu Figur 5, in welcher ebenfalls ein Querschnitt durch den Obergurt 26 gezeigt ist, jedoch nicht in Wagenmitte "WM" entsprechend Figur 4 sondern im Endbereich 23 des Wagenkastens 12, zeigt sich, daß ein an der oberen Außenfläche angeordneter Steg 21 unterschiedliche Breite hat, abhängig vom jeweiligen Ort nämlich Mitte oder Ende des Wagenkastens.

Aus der in Figur 4 und 5 gezeigten Querschnittsansicht des Obergurts 26 ist zu entnehmen, daß dieser als Blechprofil ausgebildet ist und zu seiner Versteifung mit Quersegmenten 27 versehen ist. Auch diese Quersegmente 27 sind gelocht ausgeführt, wobei in Abhängigkeit des zum Ausgleich des Breitenunterschiedes zwischen dem Dach 16 und der Seitenwand 14 der an der oberen Außenfläche des Obergurts 26 vorgesehene Steg 21 unterschiedlich breit ausgeführt ist.

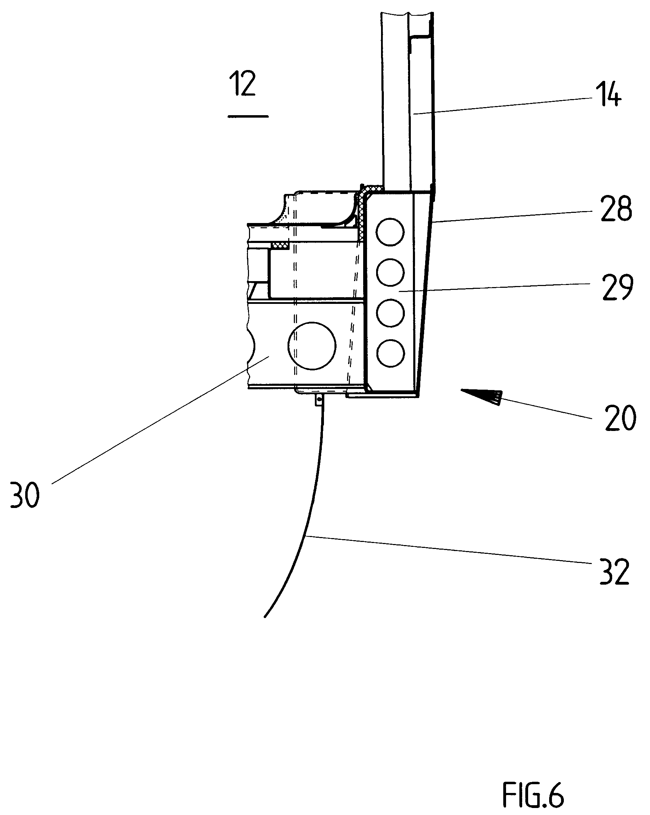

In Figur 6 ist der untere Anschluß der Seitenwand 14 des Wagenkastens 12 an das Untergestell 20 gezeigt, welches im wesentlichen durch den Außenwandträger 28 getragen ist. Ferner ist der Querträger 30 zu erkennen, der mit dem Außenlangträger 28 verbunden ist und zur Befestigung einer nicht näher dargestellten Bodenwanne des Fahrzeugkastens 12 mit dem Untergestell 20 dient. An der Unterseite des Querträgers 30 schließt eine Seitenverkleidung 32 an, welche die Wagenlängsseite nach unten abdeckt.

## Patentansprüche

1. Spurgebundenes Fahrzeug (10), insbesondere Personenwagen, mit einem auf einem Untergestell (20) mit Bodenwanne angeordneten Wagenkasten (12), mit zwei im Abstand von seinen Stirnseiten (15) jeweils in einem Fahrwerksbereich (22) angeordneten Fahrwerken (18), einem dazwischen befindlichen Mittelbereich (24) und jeweils sich vom Fahrwerksbereich (22) zu den Stirnseiten (21) hin verjüngenden Endbereichen (23) sowie mit einem Dach (16), dadurch gekennzeichnet, daß der Grundriß des Wagenkastens (12) polygonartige Längsseiten aufweist mit von den Strinseiten (15) zum Fahrwerksbereich (22) hin zunehmender Breite und einem hierzu verengten Mittelbereich (24) mit geringerer Breite.

2. Fahrzeug nach Anspruch 1, dadurch gekennzeichnet, daß der Grundriß symmetrisch zueinander augebildete Längsseiten aufweist und daß die Fahrwerksbereiche (22) beiderseits des Mittelbereichs (24) die gleiche Außenkontur haben.

3. Fahrzeug nach Anspruch 1 oder 2, dadurch gekennzeichnet, daß die Seitenwände (14) des Wagenkastens (12) der polygonartigen Kontur der Längsseiten des Grundrisses folgen.

4. Fahrzeug nach einem der vorherigen Ansprüche, dadurch gekennzeichnet, daß der Wagenkasten (12) im Fahrwerksbereich (22) eine maximal zulässige Breite und im Mittelbereich eine hiervon unterschiedliche geringere Mindestbreite aufweist.

5. Fahrzeug nach einem der vorherigen Ansprüche, dadurch gekennzeichnet, daß die Anbindung des Dachs (16) an die Seitenwände (14) im gekrümmten Bereich der Außenkontur des Fahrzeugs (10) vorgesehen ist.

6. Fahrzeug nach einem der vorherigen Ansprüche, dadurch gekennzeichnet, daß das Dach (16) des Fahrzeugs (10) an die Mindesbreite des Mittelbereichs (24) angepaßt ist und an seinen Längsseiten geradlinig durchlaufend ausgeführt ist und daß durch Breitenunterschiede bedingte Zwischenräume im Fahrwerksbereich (22) zwischen dem Dach (16) und den Seitenwänden (14) überdeckt sind.

7. Fahrzeug nach Anspruch 6, dadurch gekennzeichnet, daß die Zwischenräume durch Obergurte (26) und Stege (21) überdeckt sind, welche auf die Seitenwände (14) aufgesetzt sind.

8. Fahrzeug nach einem der vorherigen Ansprüche, dadurch gekennzeichnet, daß ein stetiger Verlauf der polygonartigen Längsseiten des Grundrisses des Wagenkastens (12) vorgesehen ist.

9. Fahrzeug nach einem der vorherigen Ansprüche, dadurch gekennzeichnet, daß die Drehzapfen der als Drehgestelle ausgebildeten Fahrwerke (18) im Abstand von etwa 15 % der Gesamtlänge des Fahrzeugs (10) von den Stirnseiten (15) am Wagenkasten (12) angeordnet sind.

10. Fahrzeug nach einem der vorherigen Ansprüche, dadurch gekennzeichnet, daß die Breite des Fahrzeugs (10) an der Stirnseite (21) geringer ist als im Mittelbereich (24).

11. Fahrzeug nach einem der vorherigen Ansprüche, dadurch gekennzeichnet, daß die Seitenwände (14) aus einzelnen Seitenwandelementen gebildet sind, die entsprechend dem Verlauf der polygonartigen Längsseiten mit unterschiedlichem Abstand zum entsprechenden Seitenwandelement auf der gegenüberliegenden Längsseite des Wagenkastens (12) angeordnet sind.

12. Fahrzeug nach einem der vorherigen Ansprüche, dadurch gekennzeichnet, daß zur Bildung des Untergestells (20) Außenlangträger (28) vorgesehen sind, die entsprechend den Seitenwandelementen geteilt und mit diesen gleichlaufend angeordnet sind.
